# EUROPEAN PATENT SPECIFICATION

(11) **EP 2 221 456 B1**
(45) Date of publication and mention of the grant of the patent: **28.09.2011**
(21) Application number: 09425067.7
(22) Date of filing: 18.02.2009
(51) Int. Cl.: F01D 25/00

(54) **Drain collector**
Abwassersammler
Collecteur de drainage

(43) Date of publication of application: 25.08.2010
(73) Proprietor: Quasar S.P.A., 10143 Torino (IT)
(72) Inventor:
(74) Representative: Robba, Pierpaolo

(56) References cited:
- EP-A- 1 291 501
- US-A- 2 107 188
- US-A- 3 905 564

## Description

### Technical field

The present invention relates to components for aircraft engines, and more precisely to oil drain collectors for aeronautical engines, especially for helicopters..

Drain collectors are accessories of an internal combustion engine, which are formed by tubular elements connecting different parts of the engine, for collecting and conveying liquids, vapours and mists (such as oil, water, etc.) towards a manifold or other collecting component.

Drain collectors are often arranged as a subassembly with a branched structure, comprising several tubular elements that collect the fluid from different parts of the engine and that are connected to a main branch ending at the final collecting component.

### Prior art

At present, drain collectors of this kind for aeronautical applications, which collectors are typically employed in helicopters, are made by bent rigid tubes made of titanium, and the elements in the subassembly are joined by means of mechanically secured fittings (the so-called Tee- or Y-Permaswage and straight sleeves) for requirements related to the possibility of assembling and manufacturing the welded subassemblies.

In such prior art subassemblies, considerable stresses arise due to the rigidity of the branched structure of the metal tubes, which does not enable recovering the manufacture and assembling tolerances. Such stresses are thus transferred to the engine bay structure and on the various interfaces. Such rigidity moreover gives rise to assembling criticalities, especially in correspondence of the collecting cups secured to the engine bay of the helicopter. Those stresses are potentially damaging for the system integrity.

Moreover, the present branched structure of the metal tubes requires several fittings, some of which are to be mounted during installation, with a resulting lengthening of the times required for setting the assembly working. Moreover, such fittings considerably contribute to increasing the weight of the structure.

US-A-3 905 564 discloses a system for providing a single muffler for helicopters which normally require two mufflers, comprising a Y shaped tubing adapted to receive the exhaust from each of the existing exhaust tailpipes and combining the exhaust into a single entry into a centrally mounted muffler system.

EP-A-1291501 discloses a flexible bellows tube connecting pipes in a system such as a vehicle exhaust system. Various embodiments are disclosed, with each including two conduit sections having mating corrugations that overlap to provide a seal while allowing the two sections to rotate in response to torsion loading. Different configurations of the interfitting corrugations and related structure are disclosed in the different embodiments.

It is an object of the present invention to provide an improved drain collector that overcomes, or at least noticeably reduces, the drawbacks and limitations of the prior art drain collectors.

These objects are attained according to the invention as claimed in claim 1 by a branched tubing that integrates rigid or semi-rigid sections with flexible or pliable sections (corrugated or bellows-shaped sections).

The drain collector according to the invention allows eliminating the stresses arising at the interfaces and, moreover, allows reducing the weight and the cost of the products, as well as the assembling time.

Eliminating the stresses further results in a higher reliability of the engine, this being an extremely important characteristic in an aircraft.

The above objects are attained by a branched drain collector as claimed in claim 1. Further advantageous features are set forth in the dependent claims.

### Description of the invention

The invention will now be described with reference to preferred but non-limiting embodiments thereof, shown in the accompanying drawings.

### Brief description of the Figures

In the drawings:
- Fig. 1 is a perspective view of a branched drain collector according to the invention for use in helicopters;
- Fig. 2 is a partial perspective view showing a bend obtained by means of a bellows;
- Fig. 3 is a partial perspective view showing a welded insert of the kind that can be used in a branched drain collector according to the invention.

The same reference numerals have been used in all Figures to denote equal or substantially equivalent parts.

### Description of a preferred embodiment

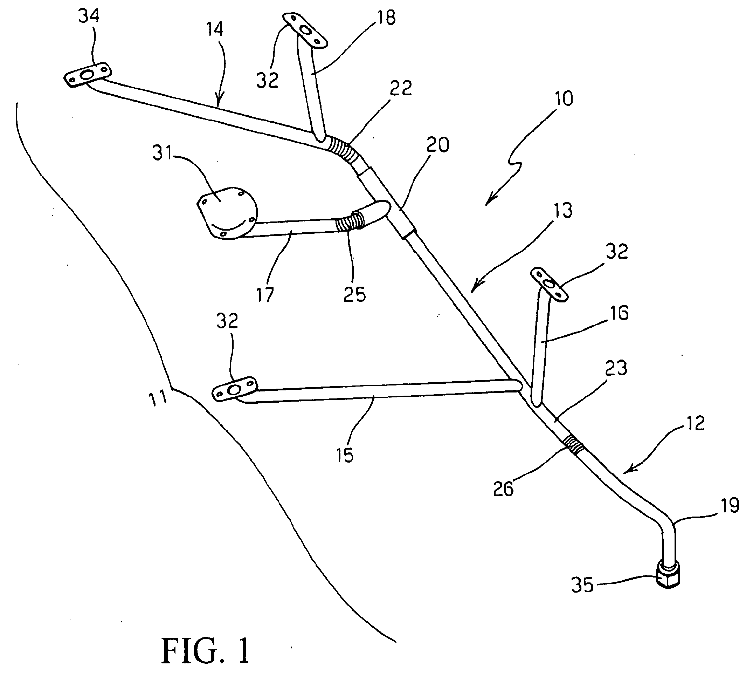

Referring to Figs, 1 and 2, showing an embodiment of a drain collector according to the invention generally denoted by reference numeral 10, such a drain collector includes a main portion or branch 11, made of metal, preferably steel, comprising one or more straight sections 12, 13, 14 connected to each other by straight sections and curved sections in correspondence of bends, such as bend 22 in Fig. 1. Main portion 11 may include bends or elbows with different angles, formed by bending a rigid tube section, as shown by bend 19 in Fig. 1, or by means of a corrugated or bellows-shaped section 22, or by means of a semi-rigid curved member, for instance a semi-rigid tube. Besides bellows members 22 for connecting two sections at an angle, corrugated members (bellows members), such as bellows member 26 in Fig. 1, may be provided also along the straight sections, to allow further modifying the configuration of the structure, thereby conferring a greater degree of freedom, for instance during assembling. The ends of the main portion are associated with suitable joining and/or collecting members, such as flange 34 or interface nut 35.

Such a configuration, comprising straight elements connected together by curved portions, will be referred to hereinafter as a "generally straight" configuration.

Collector 10 further includes a number of secondary branches 15, 16, 17, 18, they too made of metal, preferably steel, which are joined at one end to main branch 11 and are equipped, at the other end, with joining and/or collecting members, such as cups 31, flanges 32 and the like.

The secondary branches may be straight branches, like branch 16, or straight branches with a rigid elbow or bend near the flange, like branch 15, or they may have a non-rigid bend, like branch 17 including a bellows-shaped section 25.

The nominal diameter (ND) of main branch 11 may be for instance 16 mm, and the tube may be made of stainless steel AISI 304 0.4 mm thick.

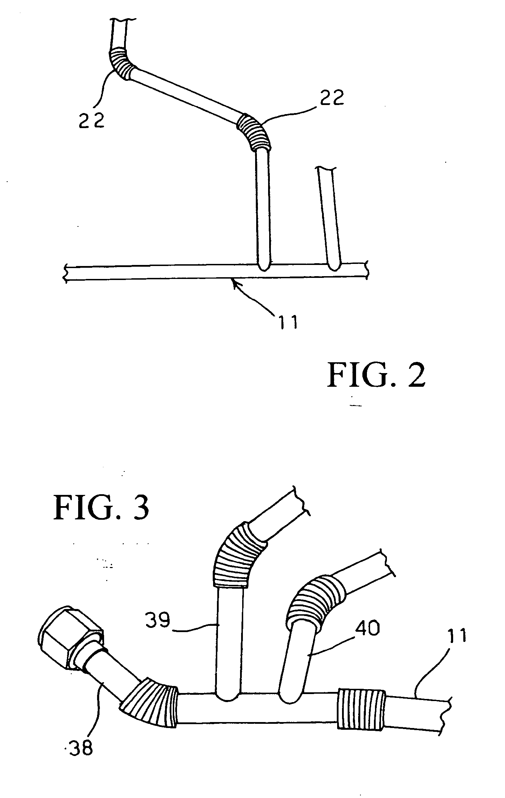

Secondary branches 15, 16, 17, 18 are made of the same material as the main branch, but they may have a smaller diameter (e.g. 13 mm). The secondary branches are joined to main branch 11 by means of TIG welding (by means of a tungsten electrode in inert gas atmosphere) or similar processes (e.g. plasma welding), or by means of inserts welded by means of a TIG welding process or similar processes (e.g. plasma welding) and they may have corrugated parts in correspondence of bends, if any. An insert of that kind, in particular a double insert, is shown in more detail in Fig. 3. Such an insert comprises a main branch section 38 with two branchings 39, 40, joined for instance by means of TIG welding or similar processes (e.g. plasma welding). More frequently, a Tee- or Y-insert has a single branching like the one denoted by reference numeral 20 in Fig. 1.

According to the invention, welding is performed on a collar obtained by cold plastic deformation directly from main branch 11 (e.g. ND 16 mm), thereby dispensing with performing the welding at the point of maximum stress of the junction and with concentrating the stresses in correspondence of such inserts.

The corrugated portions, e.g. 22 and 25, that may be present both in the main branch and in the secondary branches, allow adapting the structure, during the assembling phases, to the actual installation conditions (interfaces), thereby preventing internal stresses from arising in correspondence of the joining points and the welded junctions.

In some cases, instead of using a Tee- or Y-insert, a secondary branch may be joined with the main branch by means of threaded fittings, of known type, capable of ensuring the structural and functional continuity.

The drain collector according to the invention substantially solves the problem of the stresses and consequent breakages affecting the systems at present in use, and moreover it allows making an integral tubing, which does not require fittings, in particular Tee- or Y-Permaswage fittings, and which, thanks to the possibility of modifying the curvature of the pliable portions, can be adapted during installation to the arrangement of the aircraft structure, without giving rise to stresses in the coverings.

Eliminating the fittings moreover results in a greater assembling facility (the need of crimping is eliminated thanks to the possibility of undercut insertion of the tubing) and in a reduction of the overall weight. A reduction of the manufacturing and installation costs is also obtained.

Although the invention has been disclosed in connection with particular embodiments that are at present preferred, all obvious changes and modifications that are apparent to the skilled in the art lie within the scope of the invention, which is defined by the claims.

## Claims

1. A blanched drain collector (10) for aircraft engines, said collector (10) including a main portion (11) and at least one branch (15, 16, 17, 18) connected to said main portion (11), said collector (10) further including at least one non-rigid section (22, 26; 25) which is a pliable tube section having a corrugated portion or bellows (22, 26; 25);
said drain collector being **characterised:**
- **in that** said collector (10) is a drain collector (10) for collecting and conveying liquids, in particular oil and water, coming from aircraft engines;
- **in that** said at least one branch (15, 16, 17, 18) includes said at least one non-rigid section (25);
- **in that** said at least one non rigid section (22, 26, 25) allows said collector (10) to be adaptable to the actual installation conditions during the assembly thereof on an aircraft engine preventing internal stresses in joining points and welded junctions and
- **in that** said at least one branch (15, 17) is joined at one end to main portion (11) and is equipped, at the other end, with a joining and/or collecting member (3, 32) intended to be secured to an aircraft engine bay.

2. The drain collector (10) as claimed in claim 1, wherein said collecting member is a cup (31).

3. The drain collector (10) as claimed in claim 1 , wherein said collecting member is a flange (32)_{.}

4. The drain collector (10) as claimed in any of the preceding claims, wherein it is made of steel.

5. The drain collector (10) as claimed in any preceding claim, wherein said at least one branch (15, 16, 17, 18) is joined to said main portion (11) by TIG or plasma welding.

6. The drain collector (10) as claimed in claim 5, wherein said main portion (11) comprises a collar which is obtained by cold plastic deformation and on which said at least one branch (15, 16, 17, 18) is welded.

7. The drain collector (10) as claimed in any preceding claim, wherein said main portion (11) comprises a plurality of sections (12, 13, 14) connected to one another and includes at least one non-rigid section (22, 26).

8. The drain collector (10) as claimed in any preceding claim, wherein said main portion (11) has at least one corrugated portion (22) in correspondence with bends connecting two straight sections.

9. The drain collector (10) as claimed in any preceding claim, wherein the junction between said main portion (11) and one or more of said branches includes an insert (20; 38) having at least one branch (39, 40) joined by TIG welding.

10. The drain collector (10) as claimed in any preceding claim, wherein said main portion (11) is a generally straight portion.

## Patentansprüche

1. Verzweigter Ableitungssammler (10) für Flugzeugtriebwerke, wobei der Sammler (10) einen Hauptabschnitt (11) und wenigstens einen Zweig (15, 16, 17, 18), der mit dem Hauptabschnitt (11) verbunden ist, aufweist, wobei der Sammler (10) ferner wenigstens einen nicht-starren Abschnitt(22, 26; 25) aufweist, der ein biegsamer Röhrenabschnitt mit einem gewellten Bereich oder Faltenbalg (22, 26; 25) ist,
wobei der Ableitungssammler durch Folgendes **gekennzeichnet ist:**
**dadurch**, dass der Sammler (10) ein Ableitungssammler (10) zum Sammeln und Weiterleiten von Flüssigkeiten, insbesondere Öl und Wasser, die aus Flugzeugtriebwerken kommen, ist,
**dadurch**, dass der wenigstens eine Zweig (15, 16, 17, 18) den wenigstens einen nicht-starren Abschnitt(25) aufweist,
**dadurch**, dass der wenigstens eine nicht-starre Abschnitt(22, 26, 25) ermöglicht, dass der Sammler (10) während der Montage desselben an einem Flugzeugtriebwerk an die tatsächlichen Einbaubedingungen angepasst werden kann, was interne Spannungen in Verbindungspunkten und geschweißten Verbindungen verhindert, und
**dadurch**, dass der wenigstens eine Zweig (15, 17) an dem einen Ende mit dem Hauptabschnitt (11) verbunden ist und, an dem anderen Ende, mit einem Verbindungs- und/oder Sammelelement (31, 32) ausgestattet ist, das dafür vorgesehen ist, an einem Flugzeug-Triebwerksschacht befestigt zu werden.

2. Ableitungssammler (10) nach Anspruch 1, wobei das Sammelelement eine Schale (31) ist.

3. Ableitungssammler (10) nach Anspruch 1, wobei das Sammelelement ein Flansch (32) ist.

4. Ableitungssammler (10) nach einem der vorhergehenden Ansprüche, wobei er aus Stahl hergestellt ist.

5. Ableitungssammler (10) nach einem der vorhergehenden Ansprüche, wobei der wenigstens eine Zweig (15, 16, 17, 18) durch TIG- oder Plasma-Schweißen mit dem Hauptabschnitt (11) verbunden ist.

6. Ableitungssammler (10) nach Anspruch 5, wobei der Hauptabschnitt (11) einen Kragen aufweist, der durch kalte plastische Verformung erlangt ist und an dem der wenigstens eine Zweig (15, 16, 17, 18) angeschweißt ist.

7. Ableitungssammler (10) nach einem der vorhergehenden Ansprüche, wobei der Hauptabschnitt (11) mehrere Abschnitte (12, 13, 14) umfasst, die miteinander verbunden sind, und wenigstens einen nicht-starre Abschnitt (22, 26) aufweisen.

8. Ableitungssammler (10) nach einem der vorhergehenden Ansprüche, wobei der Hauptabschnitt (11) wenigstens einen gewellten Bereich (22) in Übereinstimmung mit Biegungen, die zwei gerade Sektionen verbinden, hat.

9. Ableitungssammler (10) nach einem der vorhergehenden Ansprüche, wobei die Verbindung zwischen dem Hauptabschnitt (11) und einem oder mehreren der Zweige einen Einsatz (20; 38) aufweist, der wenigstens einen Zweig (39, 40) hat, der durch TIG-Schweißen verbunden ist.

10. Ableitungssammler (10) nach einem der vorhergehenden Ansprüche, wobei der Hauptabschnitt (11) ein im Allgemeinen gerader Abschnitt ist.

## Revendications

1. Collecteur de drainage ramifié (10) destiné à des moteurs d'avion, ledit collecteur (10) comprenant une partie principale (11) et au moins une ramification (15, 16, 17, 18) raccordée à ladite partie principale (11), ledit collecteur (10) comportant, de plus, au moins une section non rigide (22, 26 ; 25) qui est une section de tube pliable présentant une partie ondulée ou des soufflets (22, 26 ; 25) ;
ledit collecteur de drainage étant **caractérisé :**
- **en ce que** ledit collecteur (10) est un collecteur de drainage (10) permettant de collecter et d'acheminer des liquides, en particulier de l'huile et de l'eau, provenant de moteurs d'avion ;
- **en ce que** ladite au moins une ramification (15, 16, 17, 18) comporte ladite, au moins une, section non rigide (25) ;
- **en ce que** ladite, au moins une, section non rigide (22, 26, 25) permet au dit collecteur (10) de pouvoir être adapté aux conditions d'installation réelles pendant son assemblage sur un moteur d'avion empêchant des contraintes internes de s'exercer sur les points de jonction et les jonctions soudées et
- **en ce que** ladite, au moins une, ramification (15, 17) est raccordée au niveau d'une extrémité à la partie principale (11) et est équipée, au niveau de l'autre extrémité, d'un élément de jonction et/ou de collecte (31, 32) conçu pour être fixé à un caisson de moteur d'avion.

2. Collecteur de drainage (10) selon la revendication 1, dans lequel ledit élément de collecte est une coupelle (31).

3. Collecteur de drainage (10) selon la revendication 1, dans lequel ledit élément de collecte est une bride (32).

4. Collecteur de drainage (10) selon l'une quelconque des revendications précédentes, dans lequel celui-ci est constitué d'acier.

5. Collecteur de drainage (10) selon l'une quelconque des revendications précédentes, dans lequel ladite, au moins une, ramification (15, 16, 17, 18) est raccordée à ladite partie principale (11) par une soudure TIG ou une soudure au plasma.

6. Collecteur de drainage (10) selon la revendication 5, dans lequel ladite partie principale (11) comprend une embase qui est obtenue par déformation plastique à froid et sur laquelle ladite, au moins une, ramification (15, 16, 17, 18) est soudée.

7. Collecteur de drainage (10) selon l'une quelconque des revendications précédentes, dans lequel ladite partie principale (11) comprend une pluralité de sections (12, 13, 14) raccordées l'une à l'autre et inclut au moins une section non rigide (22, 26).

8. Collecteur de drainage (10) selon l'une quelconque des revendications précédentes, dans lequel ladite partie principale (11) présente au moins une partie ondulée (22) en correspondance avec les courbures raccordant deux sections rectilignes.

9. Collecteur de drainage (10) selon l'une quelconque des revendications précédentes, dans lequel la jonction entre ladite partie principale (11) et l'une ou plusieurs desdites ramifications comporte une pièce d'insertion (20; 38) ayant au moins une ramification (39, 40) raccordée par soudure TIG.

10. Collecteur de drainage (10) selon l'une quelconque des revendications précédentes, dans lequel ladite partie principale (11) est une partie généralement rectiligne.
